# EUROPÄISCHE PATENTSCHRIFT

(11) **EP 0 987 441 B1**
(45) Veröffentlichungstag und Bekanntmachung des Hinweises auf die Patenterteilung: **10.12.2003**
(21) Anmeldenummer: 99117750.2
(22) Anmeldetag: 09.09.1999
(51) Int. Cl.: F04D 13/06, F04D 29/58, H02K 11/04, H02K 5/128

(54) **Rohrpumpe**
Tube pump
Pompe à tube

(30) Priorität: 15.09.1998 DE 19842169; 15.09.1998 DE 19842168
(43) Veröffentlichungstag der Anmeldung: 22.03.2000
(73) Patentinhaber: WILO AG, 44263 Dortmund (DE)
(72) Erfinder: Stephan, Waldemar, 44319 Dortmund (DE); Kech, Hansjürgen, 58313 Herdecke (DE); Genster, Albert, 45768 Marl (DE); Schreckenberg, Stephan, 44137 Dortmund (DE)
(74) Vertreter: COHAUSZ DAWIDOWICZ HANNIG & PARTNER

(56) Entgegenhaltungen:
- EP-A- 0 346 730
- DE-A- 3 642 727
- DE-A- 19 624 145
- DE-U- 29 618 558
- FR-A- 1 299 237
- FR-A- 1 361 954
- US-A- 3 135 212
- US-A- 4 876 492
- US-A- 5 332 369

## Beschreibung

Die Erfindung betrifft eine Kreiselpumpe mit einem die Pumpe antreibenden Elektromotor, der vollständig innerhalb des Pumpengehäuses angeordnet ist, wobei der Ansaugstutzen und der Druckstutzen an den gegenüberliegenden Stirnseiten des Pumpengehäuses angeordnet sind und wobei der Elektromotor durch Halterippen derart in einem Abstand von den Innenseiten des Pumpengehäuses entfernt gehalten ist, daß er von dem geförderten Medium umströmt wird.

Derartige Kreiselpumpen sind als sogenannte Rohrpumpen z.B. aus der FR-A-1 361 954 bekannt. Bei diesen bekannten Rohrpumpen ist jedoch die den Elektromotor steuernde Elektronikeinheit außerhalb des Pumpengehäuses angeordnet, was nicht nur ein zusätzliches Gehäuse und somit zusätzlichen Bauraum erforderlich macht, sondern auch einen erheblichen Aufwand bei der Kühlung der Elektronik bedeutet. Insbesondere beim Einsatz zur Kühlung des Verbrennungsmotors eines Kraftfahrzeugs sind das erhebliche Nachteile.

Die Verlegung einer Elektronikeinheit in das Pumpengehäuse üblicher Spaltrohr-Kreiselpumpen ist z.B. aus der DE-A-196 24 145 bekannt, wobei gerade wegen der Unterbringung der Elektronik im Gehäuse besondere Dichtungsmaßnahmen zwischen Spaltrohr und Gehäuse nötig sind.

Aufgabe der Erfindung ist es, eine konstruktiv einfache, preiswerte und leicht handhabbare Spaltrohrkreiselpumpe der eingangs genannten Art zu schaffen, die bei geringen Außenabmessungen und geringem Gewicht auf einfache Weise eine ausreichende Kühlung der Elektronik ermöglicht.

Diese Aufgabe wird erfindungsgemäß durch eine Pumpe nach Anspruch 1 gelöst.

Wesentlich ist dabei, daß die den Spaltrohrmotor steuernde Elektronikeinheit vollständig innerhalb des Pumpengehäuses angeordnet ist, vom geförderten Medium umströmt wird und der Spalttopf einstückig mit dem Motorgehäuse ausgebildet ist.

Dadurch wird ein separates Gehäuse außerhalb des Pumpengehäuses vermieden, so daß die Pumpe einschließlich der Elektronikeinheit einen geringeren Bauraum beansprucht und ein geringeres Gewicht aufweist. Gleichzeitig wird eine effektive Kühlung der Elektronik durch das geförderte Medium erreicht, so daß zusätzliche Vorrichtungen hierfür entfallen können. Bei günstigen Strömungsverhältnissen wird auf diese Weise eine besonders gute Kühlwirkung erreicht.

Die Pumpe ist bei einfacher Konstruktion und Montage kostengünstig herzustellen und leicht handhabbar.

Der Elektromotor kann vorzugsweise als elektronisch kommutierter bürstenloser Gleichstrommotor, aber auch als Wechselstrommotor ausgeführt sein, bei dem die Elektronik beispielsweise einen Umrichter beinhalten kann.

Besonders vorteilhaft ist es, wenn die Elektronikeinheit an der dem Laufrad abgewandten Stirnseite des Motorgehäuses angeordnet ist. Auf diese Weise können besonders günstige Strömungsverhältnisse erreicht werden.

Besonders vorteilhaft ist es dabei ferner, wenn die Elektronikeinheit das Motorgehäuse an der dem Laufrad abgewandten Stirnseite abschließt und abdichtet. Dadurch kann ein separater Motorgehäuseboden eingespart werden, was zusätzlichen Bauraum und zusätzliches Gewicht einspart.

In einer bevorzugten Ausführungsform ist der Stator des Elektromotors durch die in das Motorgehäuse eingesetzte Elektronikeinheit gegen das geförderte Medium abgedichtet, wobei zur Abdichtung eine einzige Dichtung ausreicht, so daß eine besonders einfache Konstruktion und eine kostengünstige Montierbarkeit erreicht wird.

Besonders vorteilhaft ist es außerdem, wenn die Kabel von der Elektronikeinheit durch mindestens eine Halterippe hindurch aus dem Pumpengehäuse hinaus geführt sind. Dadurch sind die Leitungen besonders geschützt. Hierbei kann auch ein Anschlußstecker außenseitig in dem Pumpengehäuse vorgesehen sein.

Ein besonders bevorzugtes Einsatzgebiet der erfindungsgemäßen Kreiselpumpe stellt aufgrung der beengten Platzverhältnisse der Bereich der Kraftfahrzeugmotoren dar. Hierbei kann die kleinbauende Pumpe vorteilhafterweise die Kühlflüssigkeit im Kühlkreislauf des Verbrennungsmotors fördern.

Schon lange ist es bekannt, die Kühlflüssigkeit im Kreislauf eines wassergekühlten Verbrennungsmotors von Kraftfahrzeugen durch Pumpen zu fördern, die über einen Keilriemen vom Verbrennungsmotor angetrieben werden. In letzter Zeit geht man jedoch vermehrt dazu über, die Wasserpumpe durch einen separaten Elektromotor anzutreiben, um das Kühlsystem besser steuern bzw. regeln zu können.

Dabei stellt der Elektromotor ein zusätzliches Bauteil dar, welches in dem stark begrenzten Platz des Motorraums untergebracht werden muß, was oftmals wegen der Vielzahl der hier angeordneten Aggregate und Bauteile schwierig ist. Außerdem ist gerade bei den hohen Temperaturen eines Verbrennungsmotors die Kühlung der Elektronik des Elektromotors besonders wichtig.

Um die erfindungsgemäße Pumpe platzsparend im Motorraum unterbringen zu können und eine einfache Kühlung der Elektronik des Elektromotors zu ermöglichen wird daher vorgeschlagen, die Pumpe mit dem Elektromotor und der Elektronikeinheit vollständig innerhalb der Leitungen und/oder der Behälter des Kühlwasserkreislaufs anzuordnen.

Ein weiterer Vorteil besteht dabei darin, daß der Betrieb der Pumpe geringere Geräusche verursacht, da die umgebende Kühlflüssigkeit die Geräusche dämpft.

Besonders vorteilhaft ist es ferner, wenn das Pumpengehäuse einen Teil der Leitungen des Kühlkreislaufs bildet, so daß die Pumpe mit dem Elektromotor und der Elektronikeinheit vollständig innerhalb der Leitungen des Kühlwasserkreislaufs angeordnet ist. Die Leitungen bilden dabei an der Stelle der Pumpe lediglich eine Rohrverdickung, so daß weiterer Bauraum für die Pumpe und die Elektronikeinheit nicht erforderlich ist.

Die Pumpe kann in einer bevorzugten Ausführungsform alternativ auch in einem in dem Kühlkreislauf vorgesehenen Behälter angeordnet sein. Insbesondere kann sie in dem Ausgleichsbehälter des Kühlkreislaufs angeordnet sein. Der Ausgleichsbehälter ist üblicherweise so groß dimensioniert, daß die Pumpe und der Elektromotor vollständig darin untergebracht sein können. Außerdem wird hier eine besonders gute Kühlwirkung für die Motorelektronik erzielt.

Besonders vorteilhaft ist es dabei ferner, wenn die Pumpe in den Ausgleichsbehälter eingesetzt und lösbar darin befestigt ist. Auf diese Weise wird die Möglichkeit einer besonders leichten Montage und Demontage, z.B. für Wartungsarbeiten, geschaffen.

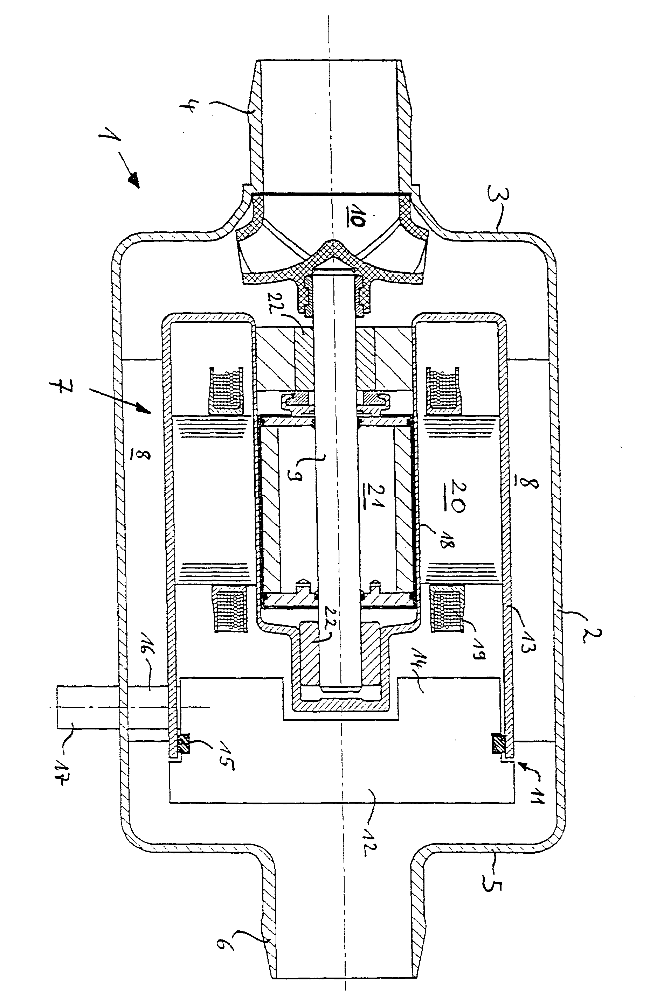

Weitere Vorteile und Merkmale der Erfindung ergeben sich aus den Unteransprüchen sowie aus der nachfolgenden Beschreibung und dem in der Zeichnung dargestellten Ausführungsbeispiel.

Die Figur zeigt eine Schnittansicht einer erfindungsgemäßen Kreiselpumpe.

Die Kreiselpumpe 1 weist ein zylinderförmiges Gehäuse 2 auf, das an einer Stirnseite 3 einen Ansaugstutzen 4 und an der gegenüberliegenden Stirnseite 5 einen Druckstutzen 6 aufweist. Zentral im Gehäuse 2 ist ein Elektromotor 7 über mehrere Halterippen 8 gehalten, der über eine Welle 9 ein Laufrad 10 antreibt, welches sich unmittelbar hinter dem Ansaugstutzen 4 befindet. Der Ansaugstutzen 4 und der Druckstutzen 6 sind jeweils koaxial zur Welle 9 angeordnet.

Auf der dem Laufrad 10 abgewandten Stirnseite 11 des Elektromotors 7 befindet sich eine Elektronikeinheit 12, in der die den Elektromotor 7 steuernde Elektronik untergebracht ist. Das Motorgehäuse 13 ist dabei an der dem Laufrad 10 abgewandten Stirnseite 11 offen ausgebildet und durch die Elektronikeinheit 12 abgeschlossen. Dazu weist die Elektronikeinheit 12 einen Absatz 14 auf, der in das Motorgehäuse 13 eingesetzt ist und über einen Dichtring 15 das Motorgehäuse gegenüber dem geförderten Medium abdichtet. Weitere Dichtmittel sind hierbei nicht erforderlich.

Die zur Elektronikeinheit 12 führenden Leitungskabel 16 verlaufen innerhalb der Halterippe 8 und münden in einem an der Außenseite des Pumpengehäuses 2 vorgesehen Stecker 17.

Der Elektromotor 7 ist als Spaltrohrmotor ausgeführt, der einen Spalttopf 18 aufweist, der einstückig mit dem Motorgehäuse 13 ausgebildet ist. Die Wicklungen 19 des Stators 20 liegen somit trocken im Inneren des Motorgehäuses 13, während der Rotor 21 mit dem geförderten Medium in Kontakt kommt, das durch die Lager 22 der Welle 9 hindurchfließen kann.

Die Pumpe 1 kann vorzugsweise in dem Ausgleichsbehälter eines nicht näher dargestellten Kühlkreislaufsystems eines Verbrennungsmotors für Kraftfahrzeuge angeordnet sein. Dabei ist nicht nur die Pumpe 1, sondern auch der Elektromotor 7 und die Elektronikeinheit 12 sind vollständig innerhalb des Ausgleichsbehälters angeordnet und von Kühlflüssigkeit umgeben bzw. umströmt. Dadurch wird eine optimale Kühlung des Elektromotors 7 und seiner Elektronik 12 gewährleistet.

## Patentansprüche

1. Kreiselpumpe mit einem die Pumpe antreibenden Elektromotor, der vollständig innerhalb des Pumpengehäuses angeordnet ist, wobei der Ansaugstutzen und der Druckstutzen an den gegenüberliegenden Stirnseiten des Pumpengehäuses angeordnet sind und wobei der Elektromotor durch Halterippen derart in einem Abstand von den Innenseiten des Pumpengehäuses entfernt gehalten ist, daß er von dem geförderten Medium umströmt wird,
**dadurch gekennzeichnet,**
**daß** der Elektromotor als Spaltrohrmotor ausgebildet ist, die den Elektromotor (7) steuernde Elektronikeinheit (12) vollständig innerhalb des Pumpengehäuses (2) angeordnet ist und vom geförderten Medium umströmt wird und daß der Spalttopf (18) einstückig mit dem Motorgehäuse (13) ausgebildet ist.

2. Kreiselpumpe nach Anspruch 1, **dadurch gekennzeichnet, daß** die Elektronikeinheit (12) an der dem Laufrad (10) abgewandten Stirnseite (11) des Motorgehäuses (13) angeordnet ist.

3. Kreiselpumpe nach Anspruch 2, **dadurch gekennzeichnet, daß** die Elektronikeinheit (12) das Motorgehäuse (13) an der dem Laufrad (10) abgewandten Stirnseite (11) abschließt.

4. Kreiselpumpe nach Anspruch 3, **dadurch gekennzeichnet, daß** der Stator des Elektromotors (7) durch die über eine einzige Dichtung (15) in das Motorgehäuse (13) eingesetzte Elektronikeinheit (12) gegen das geförderte Medium abgedichtet ist.

5. Kreiselpumpe nach einem der vorherigen Ansprüche, **dadurch gekennzeichnet, daß** die Kabel (16) von der Elektronikeinheit (12) durch mindestens eine Halterippe (8) hindurch aus dem Pumpengehäuse (2) hinaus geführt sind.

6. Kreiselpumpe nach einem der vorherigen Ansprüche, **dadurch gekennzeichnet, daß** die Pumpe (1) die Kühlflüssigkeit im Kühlkreislauf des Verbrennungsmotors eines Kraftfahrzeugs fördert.

7. Kreiselpumpe nach Anspruch 6, **dadurch gekennzeichnet, daß** das Pumpengehäuse (2) einen Teil der Leitungen des Kühlkreislaufs bildet, so daß die Pumpe (1) mit dem Elektromotor (7) und der Elektronikeinheit (12) vollständig innerhalb der Leitungen des Kühlwasserkreislaufs angeordnet ist.

8. Kreiselpumpe nach Anspruch 6, **dadurch gekennzeichnet, daß** die Pumpe (1) in einem in dem Kühlwasserkreislauf befindlichen Behälter angeordnet ist.

9. Kreiselpumpe nach Anspruch 8, **dadurch gekennzeichnet, daß** die Pumpe (1) in den Ausgleichsbehälter eingesetzt und lösbar darin befestigt ist.

## Claims

1. Centrifugal pump comprising an electric motor driving the pump and arranged completely within the pump housing, the inlet branch and the outlet branch being arranged on the opposing end faces of the pump housing and the electric motor being held at a distance from the inner faces of the pump housing by means of retaining ribs in such a manner that the medium delivered flows around it, **characterised in that** the electric motor is in the form of a canned motor, that the electronic unit (12) controlling the electric motor (7) is arranged completely within the pump housing (2) and the medium delivered flows around it and that the can (18) is formed in one piece with the motor housing (13).

2. Centrifugal pump according to claim 1, **characterised in that** the electronic unit (12) is arranged on the end face (11) of the motor housing (13) directed away from the impeller (10).

3. Centrifugal pump according to claim 2, **characterised in that** the electronic unit (12) closes the motor housing (13) at the end face (11) directed away from the impeller (10).

4. Centrifugal pump according to claim 3, **characterised in that** the stator of the electric motor (7) is sealed off from the medium delivered by the electronic unit (12) inserted into the motor housing (13) by means of one single seal (15).

5. Centrifugal pump according to one of the preceding claims, **characterised in that** the cable (16) is guided from the electronic unit (12) through at least one retaining rib (8) out of the pump housing (2).

6. Centrifugal pump according to one of the preceding claims, **characterised in that** the pump (1) delivers the coolant in the cooling circuit of the combustion engine of a motor vehicle.

7. Centrifugal pump according to claim 6, **characterised in that** the pump housing (2) forms part of the lines of the cooling circuit so that the pump (1), together with the electric motor (7) and the electronic unit (12), is arranged completely within the lines of the cooling-water circuit.

8. Centrifugal pump according to claim 6, **characterised in that** the pump (1) is arranged in a container situated in the cooling-water circuit.

9. Centrifugal pump according to claim 8, **characterised in that** the pump (1) is inserted into the expansion container and is releasably fixed therein.

## Revendications

1. Pompe centrifuge avec un moteur électrique, entraînant la pompe, qui est disposé complètement à l'intérieur du carter de pompe, l'orifice d'aspiration et l'orifice de refoulement étant disposés aux faces frontales opposées du carter de pompe et le moteur électrique étant maintenu écarté à une certaine distance des faces intérieures du carter de pompe par des nervures d'arrêt de telle manière qu'il est balayé tout autour par le fluide transporté,
**caractérisée en ce que** le moteur électrique est réalisé sous forme de moteur à tube d'entrefer, l'unité électronique (12) commandant le moteur électrique (7) est disposée complètement à l'intérieur du carter de pompe (2) et est balayée tout autour par le liquide transporté et que le pot d'entrefer (18) est réalisé d'une seule pièce avec le carter de moteur (13).

2. Pompe centrifuge selon la revendication 1,
**caractérisée en ce que** l'unité électronique (12) est disposée à la face frontale (11) du carter de moteur (13) écartée de la roue mobile (10).

3. Pompe centrifuge selon la revendication 2,
**caractérisée en ce que** l'unité électronique (12) obture le carter de moteur (13) sur la face frontale (11 ) écartée de la roue mobile (10).

4. Pompe centrifuge selon la revendication 3,
**caractérisée en ce que** le stator du moteur électrique (7) est étanché contre le liquide transporté par l'unité électronique (12) montée dans le carter de moteur (13) par une unique bague d'étanchéité (15).

5. Pompe centrifuge selon l'une des revendications précédentes,
**caractérisée en ce que** les câbles (16) sont guidés depuis l'unité électronique (12) à travers au moins une nervure d'arrêt (8) jusqu'à l'extérieur du carter de pompe (2).

6. Pompe centrifuge selon l'une des revendications précédentes,
**caractérisée en ce que** la pompe (1 ) transporte le liquide de refroidissement dans le circuit de refroidissement du moteur à combustion d'un véhicule automobile.

7. Pompe centrifuge selon la revendication 6,
**caractérisée en ce que** le carter de pompe (2) forme une partie des conduites du circuit de refroidissement de telle sorte que la pompe (1 ), avec le moteur électrique (7) et l'unité électronique (12), est complètement disposé à l'intérieur des conduites du circuit d'eau de refroidissement.

8. Pompe centrifuge selon la revendication 6,
**caractérisée en ce que** la pompe (1 ) est disposée dans un récipient se trouvant dans le circuit d'eau de refroidissement.

9. Pompe centrifuge selon la revendication 8,
**caractérisée en ce que** la pompe (1) est montée dans le réservoir de compensation et est fixée dedans de manière démontable.
